# EUROPEAN PATENT APPLICATION

(11) **EP 1 282 048 A2**
(43) Date of publication of application: **05.02.2003**
(21) Application number: 02078020.1
(22) Date of filing: 24.07.2002
(51) Int. Cl.: G06F 17/30

(54) **"Interactive modular data processing structure for local and remote fruition of multimedia digital museums."**

(30) Priority: 02.08.2001 IT MI20011696
(71) Applicant: Space S.p.A., 09124 Cagliari (IT)
(72) Inventor: Scali, Gabriele, 59100 Prato (IT)
(74) Representative: Mittler, Enrico

(57) **Abstract**

The present invention refers to an interactive modular data processing structure for local and remote fruition of multimedia digital museums comprising a first (11) and a second (13) area operatively interconnected to each other by means of a high performance local network (12). Said first area (11) includes a managing system (14) of a first database (25) controlled by an application server (16) and said second area (13) includes a plurality of stations (17, 18, 19) connected to said application server (16) through said high performance local network (12). The inventive data processing structure provides as characteristic that said application server (16) is operatively connected to receive and memorize data (29) and simultaneous information (27) from said plurality of stations (17, 18, 19) and from a module for managing computer data (26) respectively (Fig. 2).

## Description

### DESCRIPTION

The present invention refers to an interactive modular data processing structure for local and remote fruition of multimedia digital museums, in particular a structure comprising hardware means, such as networks, work stations, digital video stations and software means capable of adapting different types of information interactively and simultaneously.

In the Italian patent application MI98 A 002865 a data processing apparatus based on a client/server type informative architecture is illustrated, with a fundamental deposit of structured information, called Collection Management System (CSM), located with a server system so as to ensure file server and application server functions.

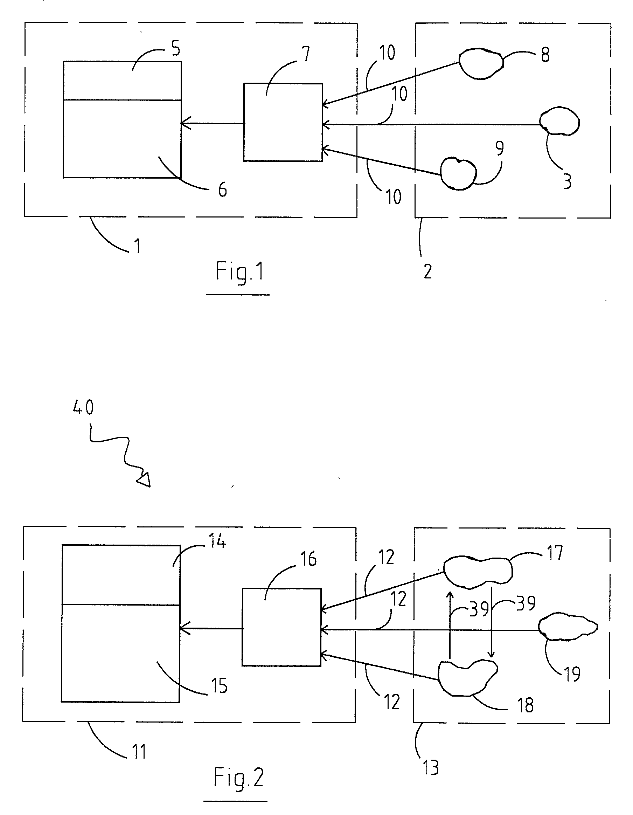

The data processing apparatus claimed in said application, and herein illustrated schematically in Figure 1, can be described as an apparatus subdivided into two fundamental areas, in which a first area 1, the so-called Back End, that represents the part of the system that cannot be seen by the end users, is connected by means of a local high-performance communication network 10 to a second area 2, the so-called Front End, that represents the part of the system dedicated to the fruition of the stored information by the end users.

Particular attention should be given to the structure of the first area 1, which comprises a managing system CMS 5 of a database 6 and an application server 7 that acts as organization system.

The CSM 5 is capable of memorizing and managing various types of computer data, as the database 6 is a multimedia database.

The application server 7 has file server and database server functions.

The multimedia database 6 provides for a ORDBMS (Object-Relational Database Management System) capable of supporting the management oriented towards the objects of complex data, such as multimedia data, and at the same time offers a query language based on an extension of the standard SQL (Structured Query Language).

In particular the CSM 5 is based on an owner system, for realizing the data structure and procedures.

The second area 2 comprises generic workstations 8 and 9, called client, in which more or less complex applications are carried out by drawing in real time on data present on server 7.

In particular said second area 2 also provides a series of management functions, to enable the users to draw use and orientation information from server 7 by means of the terminals. Each client 8 and 9 contains distinct application packages that draw on a specific portion of the multimedia database 6.

The second area 2 also comprises stations 3 suited to contain applications that can also be spread outside the museum in the context of the interactive documentation system World Wide Web, that is, by the Internet network.

It should be noted how there are application objects in stations 3 that are technologically different from each other and compel deep customization of the development and presentation software.

In view of the state of the art described, the object of the present invention is to realize a data processing structure capable of adopting different types of context information.

Additional object of the present invention is to realize a data processing structure that has the fundamental deposit of structured information, that is the CSM, in accordance with national standards, for example ICCD, and international standards, for example MDA Spectrum.

Another object of the present invention is to realize a data processing structure that has a unified model of applications at front-end level for the terminal (client) stations.

Another object of the present invention is to realize a data processing structure that has application objects that can represent other demands of a same application model at WEB terminal level.

In accordance with the present invention, said objects are reached by means of an interactive modular data processing structure for local and remote fruition of multimedia digital museums, comprising a first and a second area operatively interconnected to each other by means of a high performance local network, said first area including a managing system of a first database, controlled by an application server, said second area including a plurality of stations connected to said application server through said high performance local network, characterized in that said application server is operatively connected so as to receive and memorize data and simultaneous information respectively from said plurality of stations and from a data management module.

Thanks to the present invention an interactive modular data processing structure for local and remote fruition of multimedia digital museums can be realized having an application server that can be customized and implemented by addition of accessories and/or new system modules so as to meet the needs of specific applications.

In addition thanks to the present invention the CSM is based on national standards, for example ICCD, and international standards, for example MDA Spectrum, for the structure of data and procedures.

In addition thanks to the present invention the CSM supplies a system for controlling lists of data and a synonym dictionary so that a complete terminological control of the input data can be made.

In addition thanks to the present invention a single access station is provided that contains all the client remote modules.

The characteristics and advantages of the present invention will be evident from the following detailed description of two embodiments thereof, illustrated as non-limiting examples in the enclosed drawings, in which:
Figure 1 shows a schematic representation of the informative architecture of the data processing apparatus according to the known art;
Figure 2 shows a schematic representation of the interactive data processing structure according to the present invention;
Figure 3 shows a detail drawing of the fundamental deposit of information structured in accordance with the present invention;
Figures 4, 5 and 6 show two screen examples that can be displayed in workstations of the interactive data processing structure according to the present invention;
Figure 7 shows a second schematic embodiment of the interactive data processing structure according to the present invention;
Figure 8 shows schematically the communication network of the interactive data processing structure according to the present invention;
Figure 9 shows schematically said interactive data processing structure integrating a connection to Internet, according to the present invention.

A schematic representation of the interactive data processing structure according to the present invention is shown in Figure 2, in which it can be noted how the inventive data processing structure 40 is again subdivided into two fundamental areas, that is the Back End 11, connected by means of a high performance local communication network 12 to the Front End 13.

The area of Back End 11 comprises a managing system of the CSM 14 type of a database 15, all controlled by an organization system 16, that is controlled by an application server.

The area of Front End 13 comprises generic client stations 17 - 18, interacting with each other by means of suitable connections 39, in which more or less complex applications are carried out by drawing in real time on data present on server 16.

In addition the area of Front End 13 comprises client 19 suited to contain applications that can also be spread outside the museum in the context of the interactive documentation system World Wide Web, that is, by the Internet network.

In particular paying particular attention to the CSM 14, this is implemented for the structure of descriptive data by means of the national standards ICCD and international standards MDA Spectrum.

In addition the CSM 14 is capable of memorizing and managing computer data of various types but it is also capable of managing control lists of the terms and a synonym dictionary.

The new CMS 14 system therefore provides for a control of the synonyms, a control of the lists and is based on standard formats.

This is possible thanks to the fact that the CSM 14 is based on the concept of creation of a common deposit both for the structures and for the data procedures.

The fact of having the same deposit of text, images and multimedia guarantees safe access in regard to several categories, for example Tribunals and Scholastic Institutions, both for demanding external users in the request for selected thematic material.

The CSM 14, as it has already been said, provides a list control and a synonym dictionary, so that all the data entered in the database 15 are automatically controlled or confirmed.

In this manner it can be verified that the terms are used correctly in accordance with said lists and said dictionary.

Now with reference to the database 15, this is capable of supporting the management orientated towards the objects of complex data, such as multimedia, and at the same time offering a specific query language based on an extension of the standard SQL (Structured Query Language).

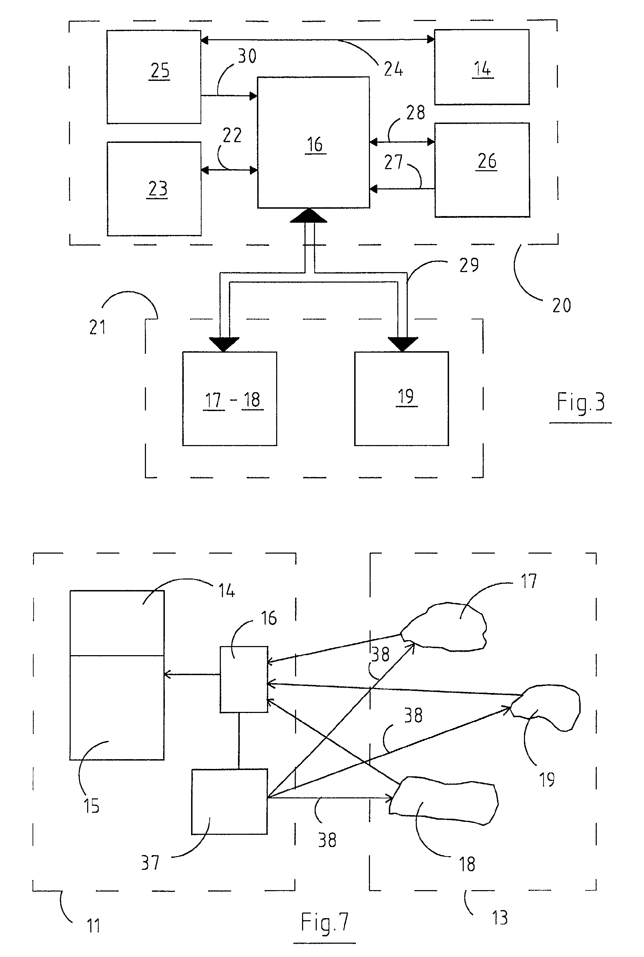

Finally with reference to the application server 16, that is to the organization system of the area of Back End 11, in addition to having file server and database server functions, it memorizes its information in a separate database (not illustrated in Figure 2) with which it communicates through a standard protocol of the ODBC or OLE/DB type, as is then illustrated in Figure 3.

The application server 16 operates like a writing editor in XML language, so as to describe in an open and unified manner the functioning of the software modules memorized in the clients 17 - 19 of the area of Front End 13.

In fact for the clients 17 - 19 a single access station is now provided that contains all the software modules stored in said Clients 17 - 19, that are supported by an owner structure that incorporates browser type functions ensuring that the applications can be accessed in local and remote in the same manner.

The browser in each client 17 - 19 will be adopted to be connected to a specific address (URL) and will see to its own functionality with support from the writings of the types XML, Javascript, Java code and/or to ActiveX components.

This is possible thanks to the fact that the server 16 uses the language XML, which in addition guarantees greater flexibility and easier maintenance of the software modules memorized in the client 17 - 19.

The use of said language XML thus enables unification with the Web world, as browser type application classes are incorporated, thus enabling the unification of client 17 - 18 to client 19.

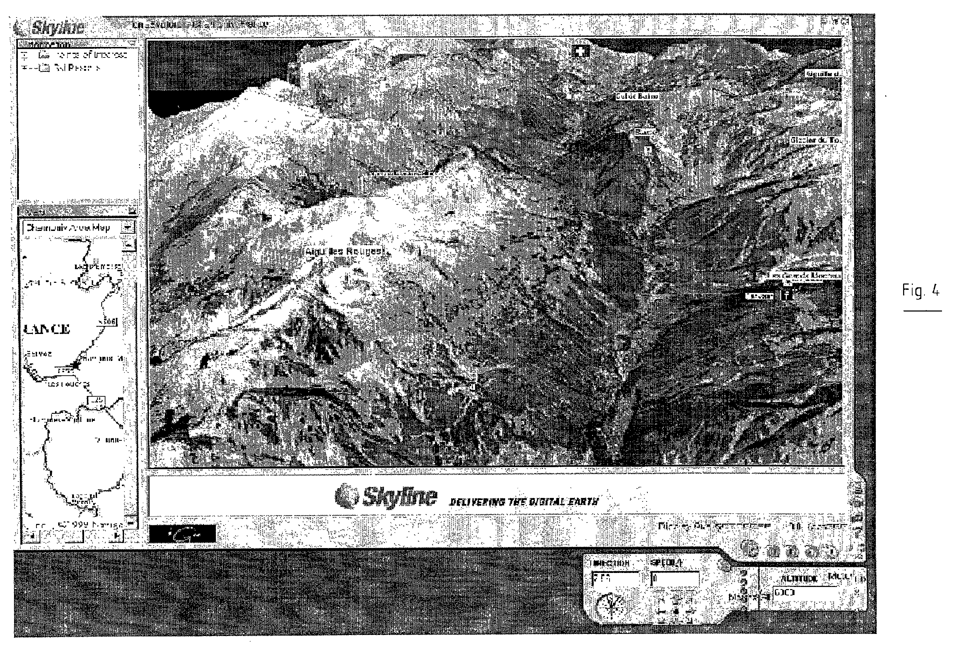

Therefore solutions of interactive geographic navigation as illustrated in Figure 4 can be realized for clients 17 - 19 .

As can be seen from Figure 4, the sphere of interest is that of systematic vision, that coordinates traditional cartographic representation, for example thematic maps, with a three-dimensional representation of the landscape that can be explored, obtained by means of the combination of air photos and satellite photos with numerical height profiles.

Through this system a considerable quantity of visual information relating to the locations can be distributed thanks to the connection with the Internet network activated by means of client 19, thus making a substantial educative contribution.

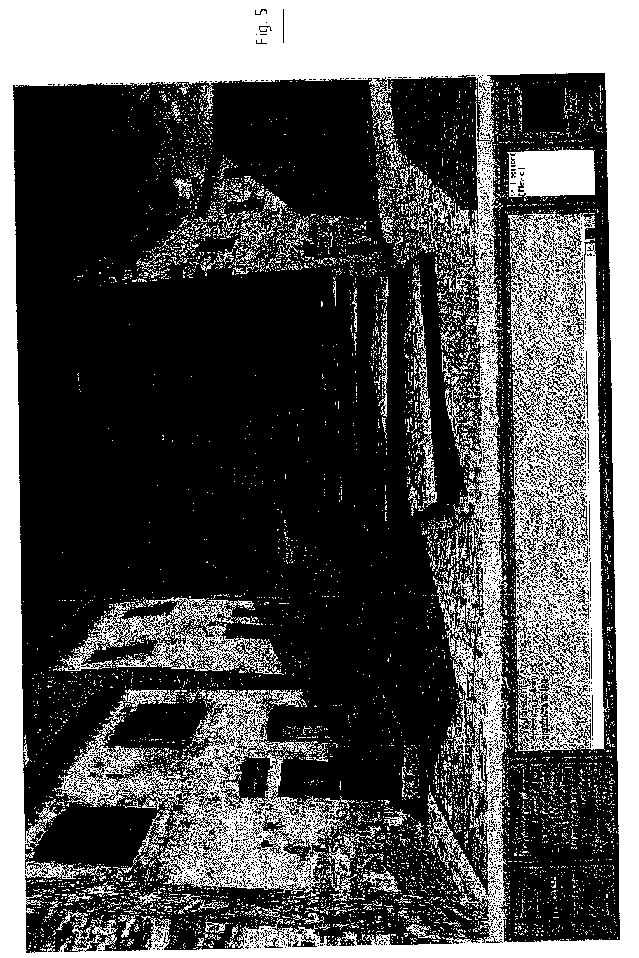

In addition, thanks to the present invention, it is also possible to realize a system for interactive off-line and on-line three-dimensional graphics as shown in Figure 5 for clients 17 - 19.

As can be noted from Figure 5, the sphere of geographic interest is that of the detail and interactive studying, through zooms on single landscape elements and/or on specific territory emergencies by means of the activation of hypertextual connections to single points of interest.

This system for the three-dimensional graphics therefore permits, by means of a standard Internet connection at 56K-baud and with a browser of the type Atmosphere of Adobe, to explore and interact with three-dimensional worlds, making navigation an experience of high added value.

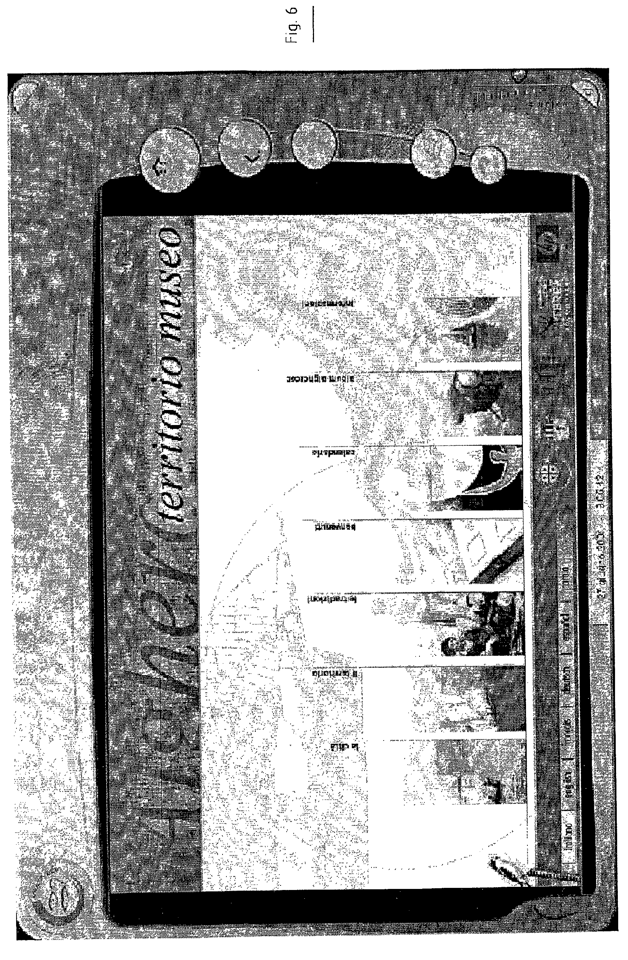

Finally it is also possible to realize a wide range of functions the same from client to client and standard user interface semantics for clients 17 - 19, as the architecture of all the clients 17 - 19 is unified, as illustrated in Figure 6, to make the use of said clients 17 - 19 by the users more immediate.

With reference to Figure 3, a detailed drawing of the fundamental deposit of information structured in accordance with the present invention can be noted.

The drawing illustrated in said Figure 3 is subdivided into a first area 20, suited to represent the area of Back End, and a second area 21, suited to represent the area of Front End.

Zone 20 comprises the application server 16 connected to receive and transfer computer data, by means of standard protocol 22 of the type ODBC or OLE/DB, to its own database 23, and in addition comprises the CSM 14 connected to receive and transfer computer data implemented in national standards ICCD and international standards MDA Spectrum, by means of a specific query language 24 based on an extension of the standard SQL (Structured Query Language) to its own database 25, and finally comprises a system for developing the content 26 suited to sending context information 27 to said application server 16 and to exchanging reciprocally meta-data 28 with said application server 16.

Zone 21 comprises the functionalities of public use, as clients 17 - 18, or World Wide Web, as client 19, that is zone 21 is a type of network which detects contextual information.

Clients 17 - 19 receive and exchange information 29 in XML format with the application server 16.

As can be noted the application server 16 does not influence the CSM 14 but cooperates with it by means of a connection 30 with the database 25, so as to memorize its own information in the database 23.

It should be noted that the databases 23 and 25 make database 15 illustrated in Figure 2.

In particular the application server 16 memorizes the contextual information 27 coming from the content development system 26, which is an application that is specifically dedicated to managing computer data, and from the network detecting contextual information 21, that is from the software applications memorized on the clients 17 - 19 used according to the particular needs of the users.

The application server 16 thus memorizes all this information in its own database 23 and when an information request arrives from the network detecting contextual information 21, the application server 16 checks both the database 23 and the database 25, supplying the most appropriate reply 29.

In this manner the possibility of adapting different types of context information can supplied, for example: 1) user context, that is users and classes of users, that is children, occasional users, professional users, foreign users etc.; 2) device context, that is technical information concerning the hardware structure; 3) space context, that is location of access to an application, that is inside the museum, in the city itself, in another country, etc.; 4) time context, that is time restrictions, for example time, day of the week of museum opening/closing times, etc.

These characteristics permit a user to have more detailed visualization experiences that are more specifically connected to their interests.

For example, by means of the inventive structure, a user of a three-dimensional virtual representation of a museum by means of the Internet would like to be able to enter a corridor and to see, next to the entrance table, a show room that is not present in the real museum, which in that given instant contains a list of the most appreciated characteristics and objects in the museum. This is possible based, for example, on how long and for how many times an object was seen in the last week. In addition the application could know what type of user is requesting the data, so as to return the most suitable reply on the basis of the user profile.

Now with reference to Figure 7, a second schematic embodiment of the interactive data processing structure according to the present invention is shown.

As can be deduced from said Figure 7, the inventive informative architecture shown in Figure 2 also provides a module 37 capable of supplying a series of added value functionalities of particular interest and use for those types of museum infrastructures that already exist, in which the infrastructure itself is complex.

The control station 37 provides for the additional functionalities that cover three distinct areas: 1) system functionality; 2) management functionality; 3) context management functionality.

The system functionality is characterized in that it provides for: 1.1) supervision of the functioning methods of the client stations 17 - 19; 1.2) a control of the remote turn on /off of the client stations 17 - 19; 1.3) management of the system configuration of the client stations 17 - 19.

This is made possible thanks to the fact that said functionalities (1.1) - (1.3) are supported by the presence of a connection 38, based on protocol TCP/IP, with said control station 37.

The management functionality is characterized in that it provides for: 2.1) dynamic management of the map of the museum and configuration of the arrangement of the access, information, stairs and lift points,; 2.2) a dynamic arrangement of client stations 17 - 19 defined by symbols that can be defined by the user and then interacting with the rest of the system functionalities by means of the so-called DRAG&DROP, at the level of configuration of the contents, and contextual menus, at the level of supervision, statistics etc. ; 2.3) distribution of the various multimedia contents on the client stations 17 - 19, capable of changing the multimedia material being carried out on a client station 17 - 19 both by programming and in real time; 2.4) archiving and resetting preset configurations of the contents of the stations of the entire museum; 2.5) use of certain types of configuration for one or more client stations 17 - 19 with time planning; 2.6) communication between the client stations 17 - 19 by means of an open and public protocol so that third parties can hook their own multimedia products to the control station, as all the functionalities are planned to support the above protocol.

The context management functionality is characterized in that it provides for: 3.1) management of an archive of all the multimedia contents present in the museum, both simple, for example images, videos, audio files, and composite, for example complete multimedia applications; 3.2) possibility to change content of a multimedia application present in the system also while it is being carried out, such as the replacement of an image, audio or video inside a presentation application or to the orientation and logging in client.

In particular the functionality (3.2) is made possible by the fact that the system is based on an open system implemented on XML and XSL formats.

Summing up, the innovative idea of the present invention consists in the fact of defining an information architecture open to the intervention of the museum supervisor, to the continuous evolution of the contents and not bound to a supplier in particular.

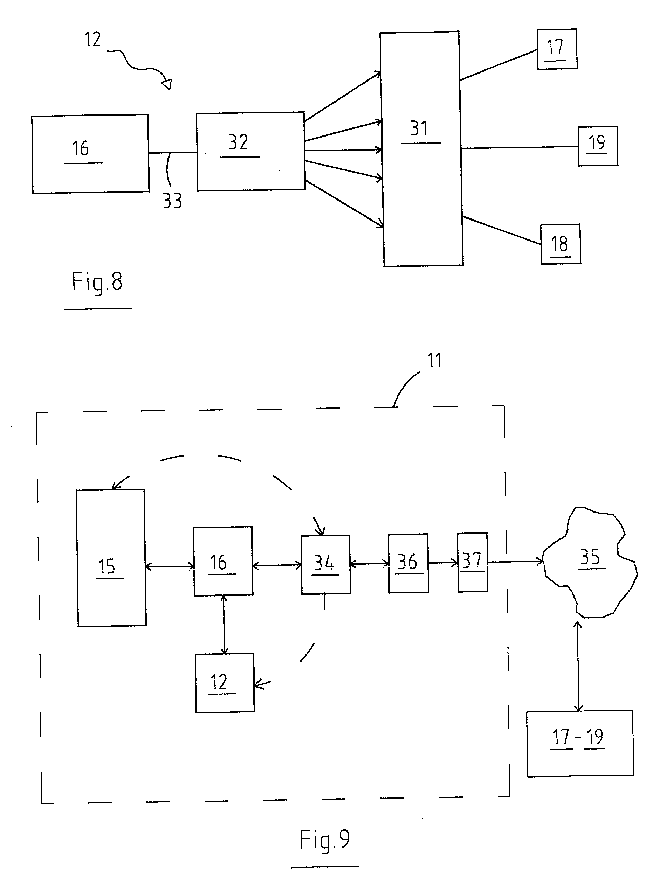

With reference to Figure 8, a diagram that schematically represents the communication network 12 for the connection between the application server 16 and the clients 17-19 is shown according to the present invention.

The multimedia applications, in particular those that use video and images, require a great width of band. In the multimedia applications the information transmitted depends also on the relative speeds between the "information items".

Taking into consideration the example of a video film: each of the frames relating to a video sequence contains information that is not sufficient to reconstruct the complete message if it is not time linked to the following frame. Therefore the fruition of multimedia information is connected to the observance of time restrictions and therefore to a wide transmissive capacity.

The present invention uses a communication network 12, mainly making use of the Fast Ethernet and Gigabit Ethernet technologies, with backbone networks 33 in optic fiber or in copper on STP cable, to optimize the network traffic.

In particular the Gigabit Ethernet standard specifies a transmission speed of 1000 Mbps on optic fiber or copper cabling; a topology based on switch capable of optimizing the communication performances is used.

The present invention in addition provides for the use of star topology, in which the cables coming from the workstations 17 - 19 converge towards a central point consisting of a distributor of network connections (Hub 31).

For a more effective distribution of the traffic on the network a switch (switch 32) between the application server 16 and the battery of Hub 31 has to be provided for. In fact the network traffic is directed almost exclusively from server 16 towards work stations 17 - 19 and, without the use of a switch 32, the request for data by a work station 17 - 19 would reduce the transmissive band of the entire network 12.

The presence of the Fast Ethernet or Gigabit Ethernet connections between the server 16 and the switch 32 guarantees a wide band of transmission and a constant flow of data between the server 16 and the work stations 17 - 19.

With reference to Figure 9, a diagram representing architecture of connection to Internet of the modular data processing apparatus is shown according to the present invention.

The Back End 1 can in fact ensure functions of connection to a telematic Internet network by means of a dedicated communication server (server Web 34), that can share the data with the application server 16 inside the museum (also acting potentially as backup in the event of breakdown at the main server, as shown by the dotted lines) but which remains isolated from the external environment by means of suitable devices, so as to guarantee the system against undesired tampering and against unauthorized removal of the multimedia contents.

The server Web 34, set up for Intranet and Internet server functions, is connected to the telematic network of Internet 35 through a specialized server (firewall 36) and a manager of digital lines (router 37), and houses a database architecture capable of enabling telematic transactions in real time.

The use of a separate machine as server WEB 34 is wise for access from outside by means of Internet 35 for safety reasons. The adoption of this device, with the use of the firewall 36, guarantees maximum safety of the museum data 15; in addition there is a further advantage, that is, the possibility of having a spare machine available in the event of the application server 16 breaking down.

The safety problem is one of the most important aspects in connection to Internet. The firewall 36 is only a specialized server, for filtering the incoming traffic according to certain specifications and only permits a certain type of outgoing traffic. It is advisable to install this module on a machine that is dedicated to the incoming mail of the museum network.

An efficient connection of the server Web 34 towards Internet 35 is reached by means of the use of the router 37, connected to the number of rapid digital lines that will be considered necessary.

## Claims

1. Interactive modular data processing structure for local and remote fruition of multimedia digital museums, comprising a first (11) and a second (13) area operatively interconnected to each other by means of a local high performance network (12), said first area (11) including a managing system (14) of a first database (25) controlled by an application server (16), said second area (13) including a plurality of stations (17, 18, 19) connected to said application server (16) through said high performance local network (12), **characterized in that** said application server (16) is operatively connected to receive and memorize data (29) and simultaneous information (27) from said plurality of stations (17, 18, 19) and from a module for managing computer data (26) respectively.

2. Data processing structure according to claim 1, **characterized in that** said application server (16) memorizes said data (29) and said simultaneous information (27) in a second database (23), by means of a protocol of the OBDC or OLE/DB type.

3. Data processing structure according to claim 2, **characterized in that** said application server (16) uses simultaneously the data contained in said first (25) and second (23) database for the distributed fruition of said museum database (15)

4. Data processing structure according to claim 3, **characterized in that** said application server (16) operates like a programmer in XML language.

5. Data processing structure according to claim 1, **characterized in that** said management system (14) includes a control of the input data (29) by means of a synonym dictionary and by means of a control of the lists.

6. Data processing structure according to claim 5, **characterized in that** said management system (14) is implemented on national standard ICCD and international standard MDA Spectrum formats.

7. Data processing structure according to claim 1, **characterized in that** said plurality of stations (17, 18, 19) are interconnected to each other (39) and present a single access station.

8. Data processing structure according to claim 1, **characterized in that** said first (25) and second (23) base form the object database (15) that can be rationally managed and consulted through structured consultation procedures, for the distributed fruition of said object database (15).

9. Data processing structure according to claim 1, **characterized in that** said first area (11) comprises a control station (37) suited to guarantee three types of functionality for said plurality of stations (17, 18, 19) such as: 1) system functionality; 2) management functionality; 3) context management functionality.

10. Data processing structure according to claim 9, **characterized in that** system functionality, said management functionality and said context management functionality are implemented by means of a protocol TCP/IP.

11. Data processing structure according to any of the previous claims, **characterized in that** the local high performance network (12) comprises at least one backbone network (33) for the connection of said application server component (16) to at least one switch (32), a plurality of devices for distributing network connections (31) suited to connecting said switch (32) to said plurality of stations (17, 18, 19).

12. Data processing structure according to any of the previous claims, **characterized in that** said backbone network (33) is a line in optic fiber or in copper according to the "Fast Ethernet or Gigabit Ethernet" standard.

13. Data processing structure according to any of the previous claims, **characterized in that** it comprises an additional server WEB (34) operatively connected to said application server component (16) for interfacing said data processing structure with an external telematic network (35), such as Internet, for the remote fruition of at least part of the information contained in said museum database (15).

14. Data processing structure according to any of the previous claims, **characterized in that** said first area (11) is the so-called Back End.

15. Data processing structure according to any of the previous claims, **characterized in that** said second area (13) is the so-called Front End.

16. Data processing structure according to any of the previous claims, **characterized in that** said plurality of stations (17, 18, 19) are the so-called user terminals or clients.
